# EUROPEAN PATENT SPECIFICATION

(11) **EP 4 309 423 B1**
(45) Date of publication and mention of the grant of the patent: **30.04.2025**
(21) Application number: 22711658.9
(22) Date of filing: 15.03.2022
(51) Int. Cl.: H04W 52/00, H04W 4/40, H04W 4/06, H04W 52/02

(54) **USER EQUIPMENT POWER SAVING FOR V2X COMMUNICATIONS**
ENERGIEEINSPARUNG FÜR BENUTZERGERÄTE FÜR V2X-KOMMUNIKATION
ÉCONOMIE D'ÉNERGIE D'ÉQUIPEMENT UTILISATEUR POUR DES COMMUNICATIONS V2X

(30) Priority: 15.03.2021 US 202163161300 P
(43) Date of publication of application: 24.01.2024
(73) Proprietor: Lenovo (Singapore) Pte. Ltd., New Tech Park 556741 (SG)
(72) Inventor: KARAMPATSIS, Dimitrios, Ruislip, Middlesex HA4 6ED (GB); BASU MALLICK, Prateek, 63303 Dreieich (DE); LÖHR, Joachim, 65203 Wiesbaden (DE)
(74) Representative: Openshaw & Co.
(86) International application number: PCT/IB2022/052336
(87) International publication number: WO 2022/195482

(56) References cited:
- "5G; Architecture enhancements for 5G System (5GS) to support Vehicle-to-Everything (V2X) services (3GPP TS 23.287 version 16.5.0 Release 16)", vol. 3GPP SA, no. V16.5.0, 12 January 2021 (2021-01-12), pages 1 - 60, XP014390294, Retrieved from the Internet <URL:http://www.etsi.org/deliver/etsi_ts/123200_123299/123287/16.05.00_60/ts_123287v160500p.pdf> [retrieved on 20210112]

## Description

### CROSS-REFERENCE TO RELATED APPLICATIONS

This application claims the benefit of United States Provisional Patent Application Number 63/161,300, entitled "METHOD FOR SUPPORTING POWER SAVING FOR V2X COMMUNICATIONS OVER GROUPCAST AND BROADCAST FOR RECEIVING UES" and filed on March 15, 2021, for Dimitrios Karampatsis et al..

### FIELD

The subject matter disclosed herein relates generally to wireless communications and more particularly relates to user equipment power saving for V2X communications.

### BACKGROUND

In wireless networks, for broadcast and groupcast communications, a receiving user equipment ("UE") may not know the PC5 quality of service ("QoS") parameters for reception and therefore may not be able to determine which PC5 discontinuous reception ("DRX") to apply for reception.

5G; Architecture enhancements for 5G System (5GS) to support Vehicle-to-Everything (V2X) services (3GPP TS 23.287 version 16.5.0 Release 16) discloses architecture enhancements to the 5G System to facilitate vehicular communications for Vehicle-to-Everything (V2X) services, over PC5 reference points NR PC5 RAT and LTE PC5 RAT and Uu reference points NR and E-UTRA, based on service requirements defined in TS 22.185 and TS 22.186.

### BRIEF SUMMARY

According to aspects of the present disclosure, there are provided a user equipment according to claim 1, a method according to claim 8, and a user equipment according to claim 14.

Disclosed are procedures for supporting power saving for v2x communications over groupcast and broadcast for receiving UEs.

In one embodiment, a first apparatus includes a processor that determines one or more destination layer-2 IDs for reception within vehicle-to-everything ("V2X") configuration information received from the network, determines one or more quality of service ("QoS") requirements for reception for each determined one or more destination layer-2 IDs, and provides the determined one or more QoS requirements for each determined one or more destination layer-2 IDs for reception to the application service ("AS") layer.

In one embodiment, a first method determines one or more destination layer-2 IDs for reception within vehicle-to-everything ("V2X") configuration information received from the network, determines one or more quality of service ("QoS") requirements for reception for each determined one or more destination layer-2 IDs, and provides the determined one or more QoS requirements for each determined one or more destination layer-2 IDs for reception to the application service ("AS") layer.

In one embodiment, a second apparatus includes a processor that receives, from a vehicle-to-everything ("V2X") layer, one or more quality of service ("QoS") requirements for one or more destination layer-2 IDs for reception of one of groupcast and broadcast transmissions and determines information for an applied PC5 discontinuous reception ("DRX") based on the QoS requirements.

In one embodiment, a second method receives, from a vehicle-to-everything ("V2X") layer, one or more quality of service ("QoS") requirements for one or more destination layer-2 IDs for reception of one of groupcast and broadcast transmissions and determines information for an applied PC5 discontinuous reception ("DRX") based on the QoS requirements.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for user equipment power saving for V2X communications;
Figure 2 is a procedure for a QoS aware power efficient PC5 communication for Pedestrian UEs;
Figure 3A is a procedure to derive PC5 DRX configuration for each PC5 QoS Flow;
Figure 3B is a continuation of Figure 3A;
Figure 4 is a block diagram illustrating one embodiment of a user equipment apparatus that may be used for user equipment power saving for V2X communications;
Figure 5 is a block diagram illustrating one embodiment of a network apparatus that may be used for user equipment power saving for V2X communications; and
Figure 6 is a flowchart diagram illustrating one embodiment of a method for user equipment power saving for V2X communications.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects.

For example, the disclosed embodiments may be implemented as a hardware circuit comprising custom very-large-scale integration ("VLSI") circuits or gate arrays, off-the-shelf semiconductors such as logic chips, transistors, or other discrete components. The disclosed embodiments may also be implemented in programmable hardware devices such as field programmable gate arrays, programmable array logic, programmable logic devices, or the like. As another example, the disclosed embodiments may include one or more physical or logical blocks of executable code which may, for instance, be organized as an object, procedure, or function.

Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random-access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, or device.

Code for carrying out operations for embodiments may be any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN"), wireless LAN ("WLAN"), or a wide area network ("WAN"), or the connection may be made to an external computer (for example, through the Internet using an Internet Service Provider ("ISP")).

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one and only one of any single item in the list. For example, "one of A, B and C" includes only A, only B or only C and excludes combinations of A, B and C. As used herein, "a member selected from the group consisting of A, B, and C," includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart diagrams and/or block diagrams.

The code may also be stored in a storage device that can direct a computer, other programmable data processing apparatus, or other devices to function in a particular manner, such that the instructions stored in the storage device produce an article of manufacture including instructions which implement the function/act specified in the flowchart diagrams and/or block diagrams.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart diagrams and/or block diagrams.

The flowchart diagrams and/or block diagrams in the Figures illustrate the architecture, functionality, and operation of possible implementations of apparatuses, systems, methods, and program products according to various embodiments. In this regard, each block in the flowchart diagrams and/or block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

Generally, the present disclosure describes systems, methods, and apparatuses for supporting power saving for vehicle-to-everything ("V2X") communications over groupcast and/or broadcast for receiving UEs. In certain embodiments, the methods may be performed using computer code embedded on a computer-readable medium. In certain embodiments, an apparatus or system may include a computer-readable medium containing computer-readable code which, when executed by a processor, causes the apparatus or system to perform at least a portion of the below described solutions.

The 3^{rd} generation partnership project ("3GPP") is studying, in Release 17, enhancements to support sidelink communication over PC5 (e.g., a reference point where the UE directly communicates with another UE over the direct channel) for pedestrians supporting sidelink communication with power efficiency, e.g., according to vehicular services requirements defined in TS 22.185 and TS 22.186.

In conventional solutions, a V2X UE transmits a message for sidelink communication over PC5 at a constant rate. For example, a Cooperative Awareness Message ("CAM") is sent over PC5 every 100ms. Such constant operation reduces the power efficiency of the UE. However, V2X UEs (e.g., cars or road side units ("RSUs")) have a battery capacity that allows such constant operation. On the other hand, pedestrian UEs (e.g., smartphones, smart watches) have limited battery capacity or available radio resources and thus a new mechanism is needed to ensure power efficient operations over PC5. One of the key issues agreed to in Release 17 V2X TR 23.776 is to study how to support the DRX mechanism defined over Uu to communication over PC5.

For the transmitting UE, it was agreed that the application service ("AS") layer in the UE determines the PC5 DRX based on the QoS requirements provided by the V2X layer. The agreed procedure is as follows:
- A V2X application requests to transmit a V2X message and provides QoS requirements to the V2X layer in the UE;
- The V2X layer in the UE determines PC5 QoS parameters and determines to establish a PC5 QoS Flow;
- The V2X layer provides the PC5 QoS Flow and the PC5 QoS parameters to the AS layer;
- The AS layer determines the PC5 DRX based on the PC5 QoS parameters.

One problem is that, for broadcast and groupcast communications, a receiving UE does not know the PC5 QoS parameters for reception and therefore is not able to determine which PC5 DRX to apply for reception.

In one embodiment, this disclosure solves the problem of how a V2X Pedestrian UE determines what DRX over PC5 to apply for reception of broadcast and/or groupcast V2X messages.

In one embodiment, the V2X layer in the UE determines the V2X service type for reception by checking the V2X configuration information. What is additionally proposed is that the V2X layer in the UE determines the QoS requirements for each determined V2X service type by checking the V2X configuration information. The UE then provides this information to the AS layer in the UE. The AS layer determines the PC5 DRX for reception for each V2X service type based on the QoS requirements.

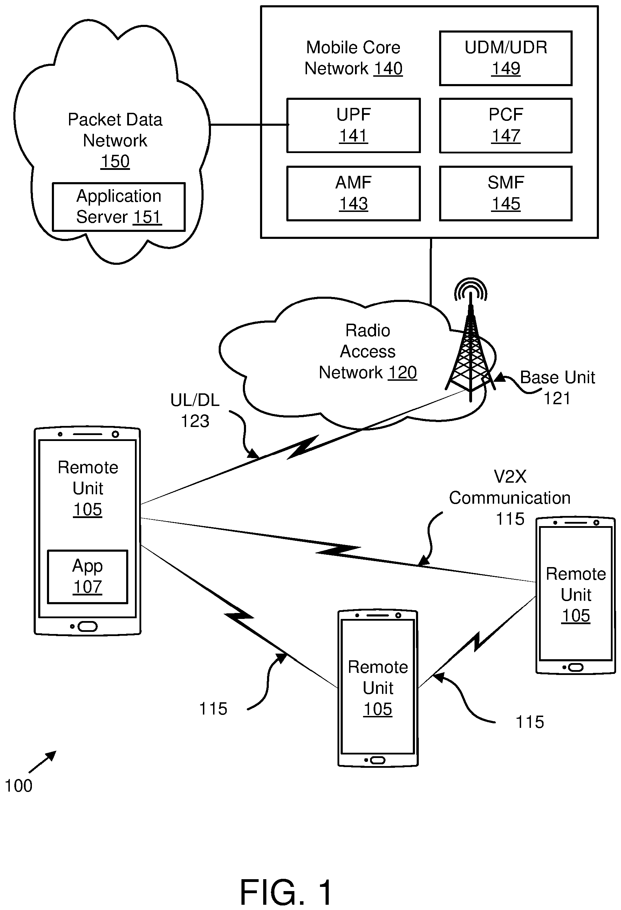

Figure 1 depicts a wireless communication system 100 supporting user equipment power saving for V2X communications, according to embodiments of the disclosure. In one embodiment, the wireless communication system 100 includes at least one remote unit 105, a radio access network ("RAN") 120, and a mobile core network 130. The RAN 120 and the mobile core network 130 form a mobile communication network. The RAN 120 may be composed of a base unit 121 with which the remote unit 105 communicates using wireless communication links 115. Even though a specific number of remote units 105, base units 121, wireless communication links 115, RANs 120, and mobile core networks 130 are depicted in Figure 1, one of skill in the art will recognize that any number of remote units 105, base units 121, wireless communication links 115, RANs 120, and mobile core networks 130 may be included in the wireless communication system 100.

In one implementation, the RAN 120 is compliant with the 5G system specified in the Third Generation Partnership Project ("3GPP") specifications. For example, the RAN 120 may be a New Generation Radio Access Network ("NG-RAN"), implementing NR RAT and/or 3GPP Long-Term Evolution ("LTE") RAT. In another example, the RAN 120 may include non-3GPP RAT (e.g., Wi-Fi^{®} or Institute of Electrical and Electronics Engineers ("IEEE") 802.11-family compliant WLAN). In another implementation, the RAN 120 is compliant with the LTE system specified in the 3GPP specifications. More generally, however, the wireless communication system 100 may implement some other open or proprietary communication network, for example Worldwide Interoperability for Microwave Access ("WiMAX") or IEEE 802.16-family standards, among other networks. The present disclosure is not intended to be limited to the implementation of any particular wireless communication system architecture or protocol.

In one embodiment, the remote units 105 may include computing devices, such as desktop computers, laptop computers, personal digital assistants ("PDAs"), tablet computers, smart phones, smart televisions (e.g., televisions connected to the Internet), smart appliances (e.g., appliances connected to the Internet), set-top boxes, game consoles, security systems (including security cameras), vehicle on-board computers, network devices (e.g., routers, switches, modems), or the like. In some embodiments, the remote units 105 include wearable devices, such as smart watches, fitness bands, optical head-mounted displays, or the like. Moreover, the remote units 105 may be referred to as the UEs, subscriber units, mobiles, mobile stations, users, terminals, mobile terminals, fixed terminals, subscriber stations, user terminals, wireless transmit/receive unit ("WTRU"), a device, or by other terminology used in the art. In various embodiments, the remote unit 105 includes a subscriber identity and/or identification module ("SIM") and the mobile equipment ("ME") providing mobile termination functions (e.g., radio transmission, handover, speech encoding and decoding, error detection and correction, signaling and access to the SIM). In certain embodiments, the remote unit 105 may include a terminal equipment ("TE") and/or be embedded in an appliance or device (e.g., a computing device, as described above).

The remote units 105 may communicate directly with one or more of the base units 121 in the RAN 120 via uplink ("UL") and downlink ("DL") communication signals. Furthermore, the UL and DL communication signals may be carried over the wireless communication links 123. Here, the RAN 120 is an intermediate network that provides the remote units 105 with access to the mobile core network 130.

In various embodiments, the remote units 105 may communicate directly with each other (e.g., device-to-device communication) using V2X communication signals 115. Here, V2X transmissions may occur on V2X resources. As discussed above, a remote unit 105 may be provided with different V2X communication resources for different V2X modes. Mode-1 corresponds to a NR-based network-scheduled V2X communication mode. Mode-2 corresponds to an NR-based UE-scheduled V2X communication mode.

In some embodiments, the remote units 105 communicate with an application server via a network connection with the mobile core network 130. For example, an application 107 (e.g., web browser, media client, telephone and/or Voice-over-Internet-Protocol ("VoIP") application) in a remote unit 105 may trigger the remote unit 105 to establish a protocol data unit ("PDU") session (or other data connection) with the mobile core network 130 via the RAN 120. The mobile core network 130 then relays traffic between the remote unit 105 and the application server (e.g., the content server 151 in the packet data network 150) using the PDU session. The PDU session represents a logical connection between the remote unit 105 and the User Plane Function ("UPF") 131.

In order to establish the PDU session (or PDN connection), the remote unit 105 must be registered with the mobile core network 130 (also referred to as '"attached to the mobile core network" in the context of a Fourth Generation ("4G") system). Note that the remote unit 105 may establish one or more PDU sessions (or other data connections) with the mobile core network 130. As such, the remote unit 105 may have at least one PDU session for communicating with the packet data network 150, e.g., representative of the Internet. The remote unit 105 may establish additional PDU sessions for communicating with other data networks and/or other communication peers.

In the context of a 5G system ("5GS"), the term "PDU Session" a data connection that provides end-to-end ("E2E") user plane ("UP") connectivity between the remote unit 105 and a specific Data Network ("DN") through the UPF 131. A PDU Session supports one or more Quality of Service ("QoS") Flows. In certain embodiments, there may be a one-to-one mapping between a QoS Flow and a QoS profile, such that all packets belonging to a specific QoS Flow have the same 5G QoS Identifier ("5QI").

In the context of a 4G/LTE system, such as the Evolved Packet System ("EPS"), a Packet Data Network ("PDN") connection (also referred to as EPS session) provides E2E UP connectivity between the remote unit and a PDN. The PDN connectivity procedure establishes an EPS Bearer, i.e., a tunnel between the remote unit 105 and a Packet Gateway ("PGW", not shown) in the mobile core network 130. In certain embodiments, there is a one-to-one mapping between an EPS Bearer and a QoS profile, such that all packets belonging to a specific EPS Bearer have the same QoS Class Identifier ("QCI").

The base units 121 may be distributed over a geographic region. In certain embodiments, a base unit 121 may also be referred to as an access terminal, an access point, a base, a base station, a Node-B ("NB"), an Evolved Node B (abbreviated as eNodeB or "eNB," also known as Evolved Universal Terrestrial Radio Access Network ("E-UTRAN") Node B), a 5G/NR Node B ("gNB"), a Home Node-B, a relay node, a RAN node, or by any other terminology used in the art. The base units 121 are generally part of a RAN, such as the RAN 120, that may include one or more controllers communicably coupled to one or more corresponding base units 121. These and other elements of radio access network are not illustrated but are well known generally by those having ordinary skill in the art. The base units 121 connect to the mobile core network 130 via the RAN 120.

The base units 121 may serve a number of remote units 105 within a serving area, for example, a cell or a cell sector, via a wireless communication link 123. The base units 121 may communicate directly with one or more of the remote units 105 via communication signals. Generally, the base units 121 transmit DL communication signals to serve the remote units 105 in the time, frequency, and/or spatial domain. Furthermore, the DL communication signals may be carried over the wireless communication links 123. The wireless communication links 123 may be any suitable carrier in licensed or unlicensed radio spectrum. The wireless communication links 123 facilitate communication between one or more of the remote units 105 and/or one or more of the base units 121. Note that during NR-U operation, the base unit 121 and the remote unit 105 communicate over unlicensed radio spectrum.

In one embodiment, the mobile core network 130 is a 5GC or an Evolved Packet Core ("EPC"), which may be coupled to a packet data network 150, like the Internet and private data networks, among other data networks. A remote unit 105 may have a subscription or other account with the mobile core network 130. Each mobile core network 130 belongs to a single public land mobile network ("PLMN"). The present disclosure is not intended to be limited to the implementation of any particular wireless communication system architecture or protocol.

The mobile core network 130 includes several network functions ("NFs"). As depicted, the mobile core network 130 includes at least one UPF 131. The mobile core network 130 also includes multiple control plane ("CP") functions including, but not limited to, an Access and Mobility Management Function ("AMF") 133 that serves the RAN 120, a Session Management Function ("SMF") 135, a Network Exposure Function ("NEF") 136, a Policy Control Function ("PCF") 137, a Unified Data Management function ("UDM") and a User Data Repository ("UDR").

The UPF(s) 131 is responsible for packet routing and forwarding, packet inspection, QoS handling, and external PDU session for interconnecting Data Network (DN), in the 5G architecture. The AMF 133 is responsible for termination of NAS signaling, NAS ciphering & integrity protection, registration management, connection management, mobility management, access authentication and authorization, security context management. The SMF 135 is responsible for session management (i.e., session establishment, modification, release), remote unit (i.e., UE) IP address allocation & management, DL data notification, and traffic steering configuration for UPF for proper traffic routing.

The NEF 136 is responsible for making network data and resources easily accessible to customers and network partners. Service providers may activate new capabilities and expose them through APIs. These APIs allow third-party authorized applications to monitor and configure the network's behavior for a number of different subscribers (i.e., connected devices with different applications). The PCF 137 is responsible for unified policy framework, providing policy rules to CP functions, access subscription information for policy decisions in UDR.

The UDM is responsible for generation of Authentication and Key Agreement ("AKA") credentials, user identification handling, access authorization, subscription management. The UDR is a repository of subscriber information and can be used to service a number of network functions. For example, the UDR may store subscription data, policy-related data, subscriber-related data that is permitted to be exposed to third party applications, and the like. In some embodiments, the UDM is co-located with the UDR, depicted as combined entity "UDM/UDR" 139.

In various embodiments, the mobile core network 130 may also include an Authentication Server Function ("AUSF") (which acts as an authentication server), a Network Repository Function ("NRF") (which provides NF service registration and discovery, enabling NFs to identify appropriate services in one another and communicate with each other over Application Programming Interfaces ("APIs")), or other NFs defined for the 5GC. In certain embodiments, the mobile core network 130 may include an authentication, authorization, and accounting ("AAA") server.

In various embodiments, the mobile core network 130 supports different types of mobile data connections and different types of network slices, wherein each mobile data connection utilizes a specific network slice. Here, a "network slice" refers to a portion of the mobile core network 130 optimized for a certain traffic type or communication service. A network instance may be identified by a single-network slice selection assistance information ("S-NSSAI,") while a set of network slices for which the remote unit 105 is authorized to use is identified by network slice selection assistance information ("NSSAI").

Here, "NSSAI" refers to a vector value including one or more S-NSSAI values. In certain embodiments, the various network slices may include separate instances of network functions, such as the SMF 135 and UPF 131. In some embodiments, the different network slices may share some common network functions, such as the AMF 133. The different network slices are not shown in Figure 1 for ease of illustration, but their support is assumed. Where different network slices are deployed, the mobile core network 130 may include a Network Slice Selection Function ("NSSF") which is responsible for selecting of the Network Slice instances to serve the remote unit 105, determining the allowed NSSAI, determining the AMF set to be used to serve the remote unit 105.

Although specific numbers and types of network functions are depicted in Figure 1, one of skill in the art will recognize that any number and type of network functions may be included in the mobile core network 130. Moreover, in an LTE variant where the mobile core network 130 comprises an EPC, the depicted network functions may be replaced with appropriate EPC entities, such as a Mobility Management Entity ("MME"), a Serving Gateway ("SGW"), a PGW, a Home Subscriber Server ("HSS"), and the like. For example, the AMF 133 may be mapped to an MME, the SMF 135 may be mapped to a control plane portion of a PGW and/or to an MME, the UPF 131 may be mapped to an SGW and a user plane portion of the PGW, the UDM/UDR 139 may be mapped to an HSS, etc.

While Figure 1 depicts components of a 5G RAN and a 5G core network, the described embodiments apply to other types of communication networks and RATs, including IEEE 802.11 variants, Global System for Mobile Communications ("GSM", i.e., a 2G digital cellular network), General Packet Radio Service ("GPRS"), UMTS, LTE variants, CDMA 2000, Bluetooth, ZigBee, Sigfox, and the like.

In the following descriptions, the term "gNB" is used for the base station but it is replaceable by any other radio access node, e.g., RAN node, eNB, Base Station ("BS"), Access Point ("AP"), NR, etc. Further the operations are described mainly in the context of 5G NR. However, the proposed solutions/methods are also equally applicable to other mobile communication systems supporting CSI enhancements for higher frequencies.

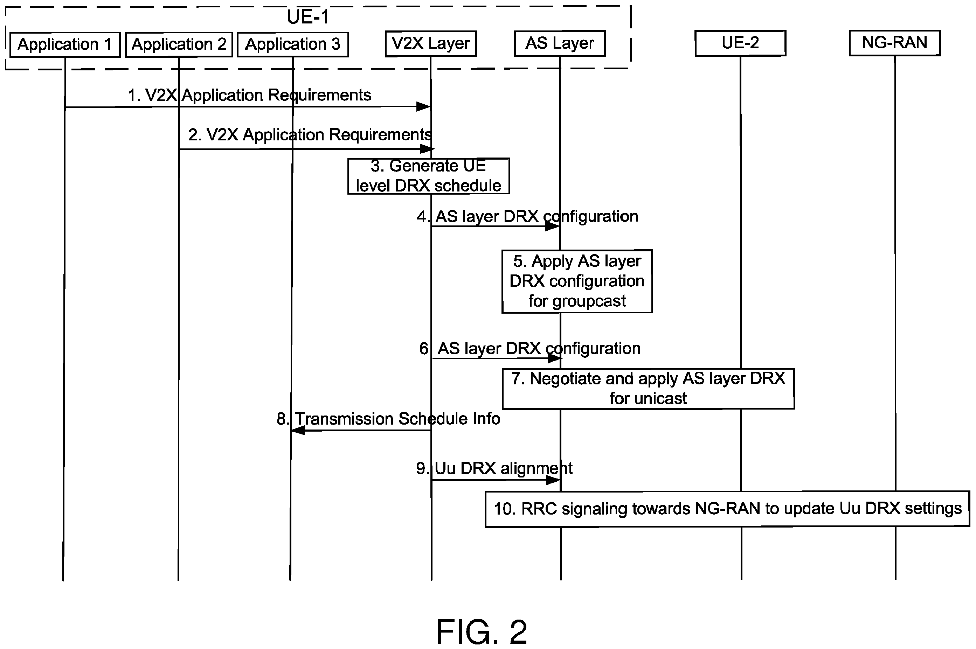

A method has been disclosed in S2-2004714 for a QoS aware power efficient PC5 communication for pedestrian UEs. The method proposes that the UEs derive the DRX based on the active applications running in the UE and negotiate the DRX with other UEs running the same application, as shown in Figure 2.

A disadvantage with the procedure shown in Figure 2 is that DRX can only be synchronized for unicast V2X operations and is not supported for groupcast or broadcast communications. In addition, certain methods involve an AMF that provides the default PC5 DRX configuration to the UE. If the UE determines that the default PC5 DRX configuration cannot be supported based on the QoS requirements of an application, the UE determines an offset extending the active time of the DRX to support such QoS requirements.

In addition, a method has been disclosed where an application function ("AF")/policy control function ("PCF") provides a PC5 DRX configuration on per V2X service. The V2X layer in the UE provides the PC5 DRX configuration to the AS layer that the AS layer uses to determine the PC5 DRX to apply.

The solution for applying PC5 DRX at the receiver UE is as follows:

The receiving UE either applies the default PC5 DRX provided by the AMF (if provided), or determines the PC5 DRX from V2X configuration information as follows:
- The receiving UE determines the V2X service types to listen based on the configured destination layer-2 IDs e.g., as specified in clause 5.6.1.2 of TS 23.287.
- The receiving UE then determines the PC5 QoS parameters based on the mapping of V2X service types to PC5 QoS parameters e.g., as specified in clause 5.1.2.1 of TS 23.287 or based on QoS requirements provided by the application.
- The receiving UE then applies the PC5 DRX according to the mapping of presentation quality indexes ("PQIs") to PC5 DRX configuration.

There are two options disclosed on how PC5 DRX for reception is determined.

In a first embodiment, PC5 DRX per V2X service type determined at AS layer, the V2X layer determines the PC5 QoS parameters based on the mapping of V2X service types to PC5 QoS parameters e.g., as specified in clause 5.1.2.1 of TS 23.287 or based on QoS requirements provided by the application. The V2X layer then passes the QoS parameters per V2X service type to the AS layer for reception. The AS layer determines the PC5 DRX to apply for reception according to the QoS requirements e.g., using a (pre)configuration, for example, RRC signaling.

In a second embodiment, PC5 DRX per V2X service type determined at V2X layer, the V2X layer determines the PC5 DRX configuration of each V2X service type based on V2X configuration information provided by the AF or the PCF. In one embodiment, the V2X configuration information includes default PQI per V2X service type and PC5 DRX per PQI. The V2X layer determines the default PQI (if no QoS requirement has been provided by the application) and determines the PC5 DRX based on the PQI. In an alternative embodiment the V2X layer determines the PC5 DRX for reception based on PC5 DRX configuration per V2X service type included within the V2X configuration information. The V2X layer then provides the PC5 DRX configuration for each determined V2X service type for reception to the AS layer. The AS layer then applies the PC5 DRX configuration.

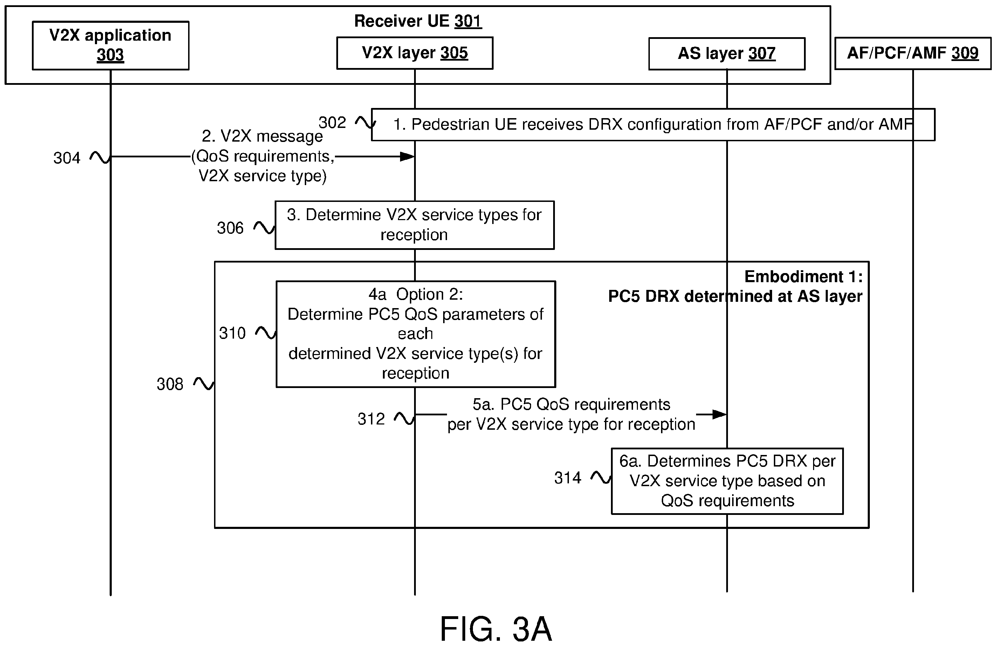

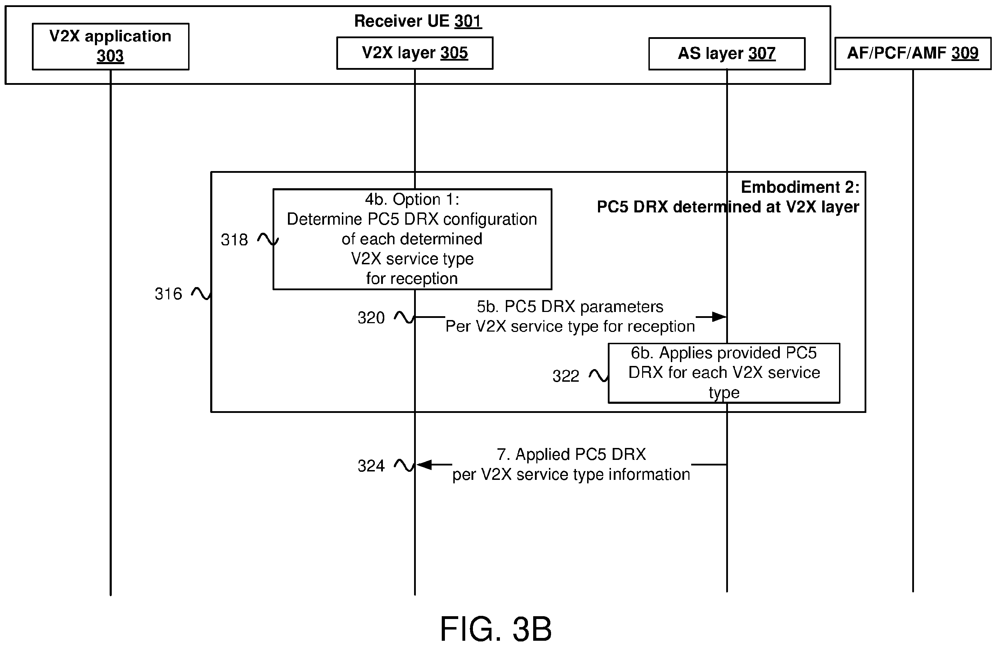

The procedure for user equipment power saving for V2X communications is illustrated in Figures 3A and 3B.

In one embodiment, at step 1 (see block 302), the UE 301 receives a PC5 DRX configuration from the AF/PCF and/or AMF 309.

In one embodiment, at step 2 (see messaging 304), the V2X application 303 requests to transmit a message via V2X and provides its application requirements, which may include QoS requirements.

In one embodiment, at step 3 (see messaging 306), the V2X layer 305 determines the V2X service type for reception for broadcast and groupcast based on the V2X configuration information, e.g., as described in 3GPP TS 23.287.

In a first embodiment (see block 308) a PC5 DRX per V2X service type is determined at the AS layer 307.

In one embodiment, at step 4a (see block 310), the receiving UE 301 determines the PC5 QoS parameters based on the mapping of V2X service types to PC5 QoS parameters, e.g., as specified in clause 5.1.2.1 of TS 23.287 or based on QoS requirements provided by the application.

In one embodiment, at step 5a (see messaging 312), the V2X layer 305 provides the QoS requirements for each determined V2X service type to the AS layer 307.

In one embodiment, at step 6a (see block 314), the AS layer 307 determines the PC5 DRX based on the QoS requirements of each V2X service type.

In a second embodiment (see block 316) a PC5 DRX per V2X service type is determined at the V2X layer 305.

In one embodiment, at step 4b (see block 318), the V2X layer 305 determines the PC5 DRX configuration of each V2X service type from the V2X configuration information, e.g., as described in the first embodiment (see block 308) above.

In one embodiment, at step 5b (see messaging 320), the V2X layer 305 provides a PC5 DRX configuration for each V2X service type to the AS layer 307.

In one embodiment, at step 6b (see block 322), the AS layer 307 in the UE 301 applies the PC5 DRX configuration.

In one embodiment, at step 7 (see messaging 324), the AS layer 307 may provide information on the applied PC5 DRX per V2X service type to the V2X layer 305.

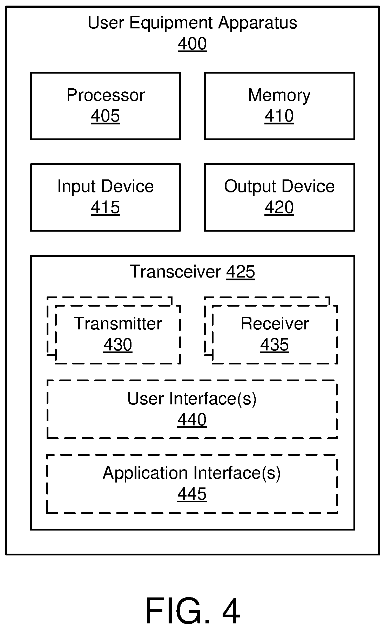

Figure 4 depicts a user equipment apparatus 400 that may be used for user equipment power saving for V2X communications, according to embodiments of the disclosure. In various embodiments, the user equipment apparatus 400 is used to implement one or more of the solutions described above. The user equipment apparatus 400 may be one embodiment of a UE, such as the remote unit 105 and/or the UE 205, as described above. Furthermore, the user equipment apparatus 400 may include a processor 405, a memory 410, an input device 415, an output device 420, and a transceiver 425. In some embodiments, the input device 415 and the output device 420 are combined into a single device, such as a touchscreen. In certain embodiments, the user equipment apparatus 400 may not include any input device 415 and/or output device 420. In various embodiments, the user equipment apparatus 400 may include one or more of: the processor 405, the memory 410, and the transceiver 425, and may not include the input device 415 and/or the output device 420.

As depicted, the transceiver 425 includes at least one transmitter 430 and at least one receiver 435. Here, the transceiver 425 communicates with one or more base units 121. Additionally, the transceiver 425 may support at least one network interface 440 and/or application interface 745. The application interface(s) 745 may support one or more APIs. The network interface(s) 440 may support 3GPP reference points, such as Uu and PC5. Other network interfaces 440 may be supported, as understood by one of ordinary skill in the art.

The processor 405, in one embodiment, may include any known controller capable of executing computer-readable instructions and/or capable of performing logical operations. For example, the processor 405 may be a microcontroller, a microprocessor, a central processing unit ("CPU"), a graphics processing unit ("GPU"), an auxiliary processing unit, a field programmable gate array ("FPGA"), a digital signal processor ("DSP"), a co-processor, an application-specific processor, or similar programmable controller. In some embodiments, the processor 405 executes instructions stored in the memory 410 to perform the methods and routines described herein. The processor 405 is communicatively coupled to the memory 410, the input device 415, the output device 420, and the transceiver 425. In certain embodiments, the processor 405 may include an application processor (also known as "main processor") which manages application-domain and operating system ("OS") functions and a baseband processor (also known as "baseband radio processor") which manages radio functions.

The memory 410, in one embodiment, is a computer readable storage medium. In some embodiments, the memory 410 includes volatile computer storage media. For example, the memory 410 may include a RAM, including dynamic RAM ("DRAM"), synchronous dynamic RAM ("SDRAM"), and/or static RAM ("SRAM"). In some embodiments, the memory 410 includes non-volatile computer storage media. For example, the memory 410 may include a hard disk drive, a flash memory, or any other suitable non-volatile computer storage device. In some embodiments, the memory 410 includes both volatile and non-volatile computer storage media.

In some embodiments, the memory 410 stores data related to CSI enhancements for higher frequencies. For example, the memory 410 may store parameters, configurations, resource assignments, policies, and the like as described above. In certain embodiments, the memory 410 also stores program code and related data, such as an operating system or other controller algorithms operating on the user equipment apparatus 400, and one or more software applications.

The input device 415, in one embodiment, may include any known computer input device including a touch panel, a button, a keyboard, a stylus, a microphone, or the like. In some embodiments, the input device 415 may be integrated with the output device 420, for example, as a touchscreen or similar touch-sensitive display. In some embodiments, the input device 415 includes a touchscreen such that text may be input using a virtual keyboard displayed on the touchscreen and/or by handwriting on the touchscreen. In some embodiments, the input device 415 includes two or more different devices, such as a keyboard and a touch panel.

The output device 420, in one embodiment, is designed to output visual, audible, and/or haptic signals. In some embodiments, the output device 420 includes an electronically controllable display or display device capable of outputting visual data to a user. For example, the output device 420 may include, but is not limited to, an LCD display, an LED display, an OLED display, a projector, or similar display device capable of outputting images, text, or the like to a user. As another, nonlimiting, example, the output device 420 may include a wearable display separate from, but communicatively coupled to, the rest of the user equipment apparatus 400, such as a smart watch, smart glasses, a heads-up display, or the like. Further, the output device 420 may be a component of a smart phone, a personal digital assistant, a television, a table computer, a notebook (laptop) computer, a personal computer, a vehicle dashboard, or the like.

In certain embodiments, the output device 420 includes one or more speakers for producing sound. For example, the output device 420 may produce an audible alert or notification (e.g., a beep or chime). In some embodiments, the output device 420 includes one or more haptic devices for producing vibrations, motion, or other haptic feedback. In some embodiments, all or portions of the output device 420 may be integrated with the input device 415. For example, the input device 415 and output device 420 may form a touchscreen or similar touch-sensitive display. In other embodiments, the output device 420 may be located near the input device 415.

The transceiver 425 includes at least transmitter 430 and at least one receiver 435. The transceiver 425 may be used to provide UL communication signals to a base unit 121 and to receive DL communication signals from the base unit 121, as described herein. Similarly, the transceiver 425 may be used to transmit and receive SL signals (e.g., V2X communication), as described herein. Although only one transmitter 430 and one receiver 435 are illustrated, the user equipment apparatus 400 may have any suitable number of transmitters 430 and receivers 435. Further, the transmitter(s) 430 and the receiver(s) 435 may be any suitable type of transmitters and receivers. In one embodiment, the transceiver 425 includes a first transmitter/receiver pair used to communicate with a mobile communication network over licensed radio spectrum and a second transmitter/receiver pair used to communicate with a mobile communication network over unlicensed radio spectrum.

In certain embodiments, the first transmitter/receiver pair used to communicate with a mobile communication network over licensed radio spectrum and the second transmitter/receiver pair used to communicate with a mobile communication network over unlicensed radio spectrum may be combined into a single transceiver unit, for example a single chip performing functions for use with both licensed and unlicensed radio spectrum. In some embodiments, the first transmitter/receiver pair and the second transmitter/receiver pair may share one or more hardware components. For example, certain transceivers 425, transmitters 430, and receivers 435 may be implemented as physically separate components that access a shared hardware resource and/or software resource, such as for example, the network interface 440.

In various embodiments, one or more transmitters 430 and/or one or more receivers 435 may be implemented and/or integrated into a single hardware component, such as a multi-transceiver chip, a system-on-a-chip, an ASIC, or other type of hardware component. In certain embodiments, one or more transmitters 430 and/or one or more receivers 435 may be implemented and/or integrated into a multi-chip module. In some embodiments, other components such as the network interface 440 or other hardware components/circuits may be integrated with any number of transmitters 430 and/or receivers 435 into a single chip. In such embodiment, the transmitters 430 and receivers 435 may be logically configured as a transceiver 425 that uses one more common control signals or as modular transmitters 430 and receivers 435 implemented in the same hardware chip or in a multi-chip module.

In one embodiment, the processor 405 determines one or more destination layer-2 IDs for reception within vehicle-to-everything ("V2X") configuration information received from the network, determines one or more quality of service ("QoS") requirements for reception for each determined one or more destination layer-2 IDs, and provides the determined one or more QoS requirements for each determined one or more destination layer-2 IDs for reception to the application service ("AS") layer.

In one embodiment, the processor 405 determines the one or more QoS requirements for reception for each determined one or more destination layer-2 IDs by determining associated V2X service types for each of the one or more destination layer-2 IDs and the associated PC5 QoS parameters for each V2X service type.

In one embodiment, the transceiver 425 receives, over a first radio interface, the V2X configuration, the V2X configuration comprising one or more destination layer-2 IDs for each V2X service type and one or more QoS requirements for each determined V2X service type for communication over a second radio interface.

In one embodiment, the transceiver 425 receives, from an application, a request to receive data over the second radio interface, the request comprising the one or more QoS requirements.

In one embodiment, the processor 405 determines the one or more QoS requirements based on at least one of the V2X configuration and the request from the application.

In one embodiment, the V2X configuration is received from a policy control function ("PCF") or an application function.

In one embodiment, the processor 405 receives information for an applied PC5 discontinuous reception ("DRX") for each determined V2X service type from the AS layer.

In one embodiment, the processor 405 receives, from a vehicle-to-everything ("V2X") layer, one or more quality of service ("QoS") requirements for one or more destination layer-2 IDs for reception of one of groupcast and broadcast transmissions and determines information for an applied PC5 discontinuous reception ("DRX") based on the QoS requirements.

In one embodiment, the processor 405 determines the information for the applied PC5 DRX based on V2X configuration information.

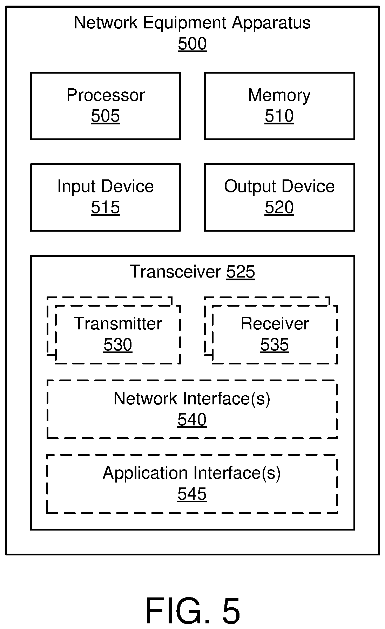

Figure 5 depicts one embodiment of a network apparatus 500 that may be used for user equipment power saving for V2X communications, according to embodiments of the disclosure. In some embodiments, the network apparatus 500 may be one embodiment of a RAN node and its supporting hardware, such as the base unit 121 and/or gNB, described above. Furthermore, network apparatus 500 may include a processor 505, a memory 510, an input device 515, an output device 520, and a transceiver 525. In certain embodiments, the network apparatus 500 does not include any input device 515 and/or output device 520.

As depicted, the transceiver 525 includes at least one transmitter 530 and at least one receiver 535. Here, the transceiver 525 communicates with one or more remote units 105. Additionally, the transceiver 525 may support at least one network interface 540 and/or application interface 545. The application interface(s) 545 may support one or more APIs. The network interface(s) 540 may support 3GPP reference points, such as Uu, N1, N2, N3, N5, N6 and/or N7 interfaces. Other network interfaces 540 may be supported, as understood by one of ordinary skill in the art.

The processor 505, in one embodiment, may include any known controller capable of executing computer-readable instructions and/or capable of performing logical operations. For example, the processor 505 may be a microcontroller, a microprocessor, a central processing unit ("CPU"), a graphics processing unit ("GPU"), an auxiliary processing unit, a field programmable gate array ("FPGA"), a digital signal processor ("DSP"), a co-processor, an application-specific processor, or similar programmable controller. In some embodiments, the processor 505 executes instructions stored in the memory 510 to perform the methods and routines described herein. The processor 505 is communicatively coupled to the memory 510, the input device 515, the output device 520, and the transceiver 525. In certain embodiments, the processor 505 may include an application processor (also known as "main processor") which manages application-domain and operating system ("OS") functions and a baseband processor (also known as "baseband radio processor") which manages radio function. In various embodiments, the processor 505 controls the network apparatus 500 to implement the above-described network entity behaviors (e.g., of the gNB) for user equipment power saving for V2X communications.

The memory 510, in one embodiment, is a computer readable storage medium. In some embodiments, the memory 510 includes volatile computer storage media. For example, the memory 510 may include a RAM, including dynamic RAM ("DRAM"), synchronous dynamic RAM ("SDRAM"), and/or static RAM ("SRAM"). In some embodiments, the memory 510 includes non-volatile computer storage media. For example, the memory 510 may include a hard disk drive, a flash memory, or any other suitable non-volatile computer storage device. In some embodiments, the memory 510 includes both volatile and non-volatile computer storage media.

In some embodiments, the memory 510 stores data relating to CSI enhancements for higher frequencies. For example, the memory 510 may store parameters, configurations, resource assignments, policies, and the like as described above. In certain embodiments, the memory 510 also stores program code and related data, such as an operating system ("OS") or other controller algorithms operating on the network apparatus 500, and one or more software applications.

The input device 515, in one embodiment, may include any known computer input device including a touch panel, a button, a keyboard, a stylus, a microphone, or the like. In some embodiments, the input device 515 may be integrated with the output device 520, for example, as a touchscreen or similar touch-sensitive display. In some embodiments, the input device 515 includes a touchscreen such that text may be input using a virtual keyboard displayed on the touchscreen and/or by handwriting on the touchscreen. In some embodiments, the input device 515 includes two or more different devices, such as a keyboard and a touch panel.

The output device 520, in one embodiment, may include any known electronically controllable display or display device. The output device 520 may be designed to output visual, audible, and/or haptic signals. In some embodiments, the output device 520 includes an electronic display capable of outputting visual data to a user. Further, the output device 520 may be a component of a smart phone, a personal digital assistant, a television, a table computer, a notebook (laptop) computer, a personal computer, a vehicle dashboard, or the like.

In certain embodiments, the output device 520 includes one or more speakers for producing sound. For example, the output device 520 may produce an audible alert or notification (e.g., a beep or chime). In some embodiments, the output device 520 includes one or more haptic devices for producing vibrations, motion, or other haptic feedback. In some embodiments, all or portions of the output device 520 may be integrated with the input device 515. For example, the input device 515 and output device 520 may form a touchscreen or similar touch-sensitive display. In other embodiments, all or portions of the output device 520 may be located near the input device 515.

As discussed above, the transceiver 525 may communicate with one or more remote units and/or with one or more interworking functions that provide access to one or more PLMNs. The transceiver 525 may also communicate with one or more network functions (e.g., in the mobile core network 80). The transceiver 525 operates under the control of the processor 505 to transmit messages, data, and other signals and also to receive messages, data, and other signals. For example, the processor 505 may selectively activate the transceiver (or portions thereof) at particular times in order to send and receive messages.

The transceiver 525 may include one or more transmitters 530 and one or more receivers 535. In certain embodiments, the one or more transmitters 530 and/or the one or more receivers 535 may share transceiver hardware and/or circuitry. For example, the one or more transmitters 530 and/or the one or more receivers 535 may share antenna(s), antenna tuner(s), amplifier(s), filter(s), oscillator(s), mixer(s), modulator/demodulator(s), power supply, and the like. In one embodiment, the transceiver 525 implements multiple logical transceivers using different communication protocols or protocol stacks, while using common physical hardware.

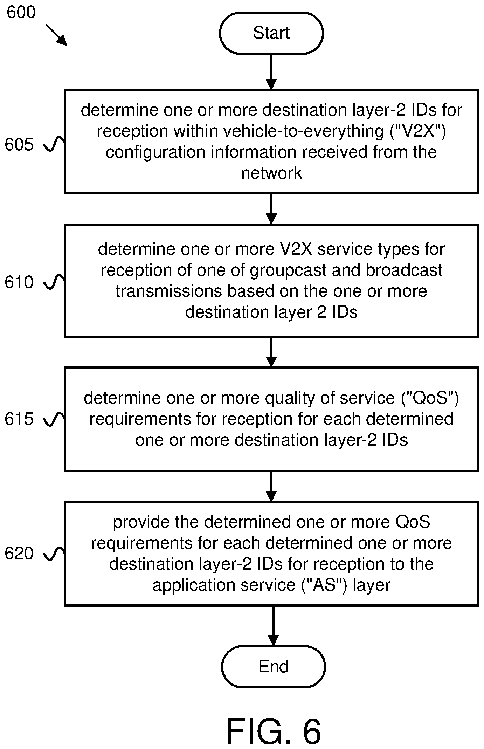

Figure 6 is a flowchart diagram of a method 600 for user equipment power saving for V2X communications. The method 600 may be performed by a UE as described herein, for example, the remote unit 105 and/or the user equipment apparatus 400. In some embodiments, the method 600 may be performed by a processor executing program code, for example, a microcontroller, a microprocessor, a CPU, a GPU, an auxiliary processing unit, a FPGA, or the like.

In one embodiment, the method 600 begins and determines 605 one or more destination layer-2 IDs for reception within vehicle-to-everything ("V2X") configuration information received from the network. In one embodiment, the method 600 determines 610 one or more V2X service types for reception of one of groupcast and broadcast transmissions based on the one or more destination layer 2 IDs. In one embodiment, the method 600 determines 615 one or more quality of service ("QoS") requirements for reception for each determined one or more destination layer-2 IDs. In one embodiment, the method 600 provides 620 the determined one or more QoS requirements for each determined one or more destination layer-2 IDs for reception to the application service ("AS") layer, and the method 600 ends.

A first apparatus is disclosed for user equipment power saving for V2X communications. The first apparatus may be performed by a UE as described herein, for example, the remote unit 105 and/or the user equipment apparatus 400. In some embodiments, the first apparatus may be performed by a processor executing program code, for example, a microcontroller, a microprocessor, a CPU, a GPU, an auxiliary processing unit, a FPGA, or the like.

In one embodiment, the first apparatus includes a processor that determines one or more destination layer-2 IDs for reception within vehicle-to-everything ("V2X") configuration information received from the network, determines one or more quality of service ("QoS") requirements for reception for each determined one or more destination layer-2 IDs, and provides the determined one or more QoS requirements for each determined one or more destination layer-2 IDs for reception to the application service ("AS") layer.

In one embodiment, the processor determines the one or more QoS requirements for reception for each determined one or more destination layer-2 IDs by determining associated V2X service types for each of the one or more destination layer-2 IDs and the associated PC5 QoS parameters for each V2X service type.

In one embodiment, the first apparatus includes a transceiver that receives, over a first radio interface, the V2X configuration, the V2X configuration comprising one or more destination layer-2 IDs for each V2X service type and one or more QoS requirements for each determined V2X service type for communication over a second radio interface.

In one embodiment, the transceiver receives, from an application, a request to receive data over the second radio interface, the request comprising the one or more QoS requirements.

In one embodiment, the processor determines the one or more QoS requirements based on at least one of the V2X configuration and the request from the application.

In one embodiment, the V2X configuration is received from a policy control function ("PCF") or an application function.

In one embodiment, the processor receives information for an applied PC5 discontinuous reception ("DRX") for each determined V2X service type from the AS layer.

A first method is disclosed for user equipment power saving for V2X communications. The first method may be performed by a UE as described herein, for example, the remote unit 105 and/or the user equipment apparatus 400. In some embodiments, the first method may be performed by a processor executing program code, for example, a microcontroller, a microprocessor, a CPU, a GPU, an auxiliary processing unit, a FPGA, or the like.

In one embodiment, the first method determines one or more destination layer-2 IDs for reception within vehicle-to-everything ("V2X") configuration information received from the network, determines one or more quality of service ("QoS") requirements for reception for each determined one or more destination layer-2 IDs, and provides the determined one or more QoS requirements for each determined one or more destination layer-2 IDs for reception to the application service ("AS") layer.

In one embodiment, the first method determines the one or more QoS requirements for reception for each determined one or more destination layer-2 IDs by determining associated V2X service types for each of the one or more destination layer-2 IDs and the associated PC5 QoS parameters for each V2X service type

In one embodiment, the first method receives, over a first radio interface, the V2X configuration, the V2X configuration comprising one or more destination layer-2 IDs for each V2X service type and one or more QoS requirements for each determined V2X service type for communication over a second radio interface.

In one embodiment, the first method receives, from an application, a request to receive data over the second radio interface, the request comprising the one or more QoS requirements.

In one embodiment, the first method determines the one or more QoS requirements based on at least one of the V2X configuration and the request from the application.

In one embodiment, the V2X configuration is received from a policy control function ("PCF") or an application function.

A second apparatus is disclosed for user equipment power saving for V2X communications. The second apparatus may be performed by a UE as described herein, for example, the remote unit 105 and/or the user equipment apparatus 400. In some embodiments, the second apparatus may be performed by a processor executing program code, for example, a microcontroller, a microprocessor, a CPU, a GPU, an auxiliary processing unit, a FPGA, or the like.

In one embodiment, the second apparatus includes a processor that receives, from a vehicle-to-everything ("V2X") layer, one or more quality of service ("QoS") requirements for one or more destination layer-2 IDs for reception of one of groupcast and broadcast transmissions and determines information for an applied PC5 discontinuous reception ("DRX") based on the QoS requirements.

In one embodiment, the processor determines the information for the applied PC5 DRX based on V2X configuration information.

A second method is disclosed for user equipment power saving for V2X communications. The second method may be performed by a UE as described herein, for example, the remote unit 105 and/or the user equipment apparatus 400. In some embodiments, the second method may be performed by a processor executing program code, for example, a microcontroller, a microprocessor, a CPU, a GPU, an auxiliary processing unit, a FPGA, or the like.

In one embodiment, the second method receives, from a vehicle-to-everything ("V2X") layer, one or more quality of service ("QoS") requirements for one or more destination layer-2 IDs for reception of one of groupcast and broadcast transmissions and determines information for an applied PC5 discontinuous reception ("DRX") based on the QoS requirements.

In one embodiment, the second method determines the information for the applied PC5 DRX based on V2X configuration information.

Embodiments may be practiced in other specific forms. The described embodiments are to be considered in all respects only as illustrative and not restrictive. The scope of the invention is, therefore, indicated by the appended claims rather than by the foregoing description.

## Claims

1. A user equipment (400), UE for wireless communication, comprising:
at least one memory (410); and
at least one processor (405) coupled with at least one memory and configured to cause the UE to:
receive vehicle-to-everything, V2X, configuration information that comprises one or more destination layer-2 identifiers, IDs, for reception;
determine (605) the one or more destination layer-2 IDs for reception according to the V2X configuration information; **characterized by** further:
determine (615), at a first layer of the UE, one or more quality of service, QoS, requirements for reception for each determined one or more destination layer-2 IDs; and
provide (620), to a second layer of the UE, the determined one or more QoS requirements for each determined one or more destination layer-2 IDs for reception.

2. The UE of claim 1, wherein the processor is configured to cause the UE to determine the one or more QoS requirements for reception for each determined one or more destination layer-2 IDs by determining associated V2X service types for each of the one or more destination layer-2 IDs and the associated PC5 QoS parameters for each V2X service type.

3. The UE of claim 1, further comprising a transceiver that is configured to cause the UE to receive, over a first radio interface, the V2X configuration, the V2X configuration comprising one or more destination layer-2 IDs for each V2X service type and one or more QoS requirements for each determined V2X service type for communication over a second radio interface.

4. The UE of claim 3, wherein the transceiver is configured to cause the UE to receive, from an application, a request to receive data over the second radio interface, the request comprising the one or more QoS requirements.

5. The UE of claim 3, wherein the processor is configured to cause the UE to determine the one or more QoS requirements based on at least one of the V2X configuration and the request from the application.

6. The UE of claim 1, wherein the V2X configuration is received from one of a policy control function, PCF, and an application function.

7. The UE of claim 1, wherein the processor is configured to cause the UE to receive information for an applied PC5 discontinuous reception, DRX, for each determined V2X service type from the second layer.

8. A method (600) for wireless communication, comprising:
receiving vehicle-to-everything, V2X, configuration information that comprises one or more destination layer-2 identifiers, IDs, for reception;
determining (605) one or more destination layer-2 IDs for reception according to the V2X configuration information; **characterized by** further:
determining (615), at a first layer of a user equipment, UE, one or more quality of service, QoS, requirements for reception for each determined one or more destination layer-2 IDs; and
providing (620) , to a second layer of the UE, the determined one or more QoS requirements for each determined one or more destination layer-2 IDs for reception.

9. The method of claim 8, further comprising determining the one or more QoS requirements for reception for each determined one or more destination layer-2 IDs by determining associated V2X service types for each of the one or more destination layer-2 IDs and the associated PC5 QoS parameters for each V2X service type.

10. The method of claim 8, further comprising receiving, over a first radio interface, the V2X configuration, the V2X configuration comprising one or more destination layer-2 IDs for each V2X service type and one or more QoS requirements for each determined V2X service type for communication over a second radio interface.

11. The method of claim 10, further comprising receiving, from an application, a request to receive data over the second radio interface, the request comprising the one or more QoS requirements.

12. The method of claim 10, further comprising determining the one or more QoS requirements based on at least one of the V2X configuration and the request from the application.

13. The method of claim 8, wherein the V2X configuration is received from one of a policy control function, PCF, and an application function.

14. A user equipment (400), UE for wireless communication, comprising:
at least one memory (410); and **characterised by**:
at least one processor (405) coupled with at least one memory and configured to cause the UE to:
receive, from a vehicle-to-everything, V2X, layer, one or more quality of service, QoS, requirements for one or more destination layer-2 IDs for reception of one of groupcast and broadcast transmissions; and
determine information for an applied PC5 discontinuous reception, DRX, based on the QoS requirements.

15. The UE of claim 14, wherein the processor is configured to cause the UE to determine the information for the applied PC5 DRX based on V2X configuration information.

## Patentansprüche

1. Benutzereinrichtung (400), UE, für eine drahtlose Kommunikation, umfassend:
mindestens einen Speicher (410); und
mindestens einen Prozessor (405), der mit mindestens einem Speicher gekoppelt und konfiguriert ist, um die UE zu veranlassen zum:
Empfangen von Fahrzeug-an-Alles-Konfigurationsinformationen, V2X-Konfigurationsinformationen, die einen oder mehrere Zielschicht-2-Identifizierer, IDs, für einen Empfang umfassen;
Bestimmen (605) des einen oder der mehreren Zielschicht-2-IDs für den Empfang gemäß den V2X-Konfigurationsinformationen;
**gekennzeichnet durch** ferner:
Bestimmen (615), auf einer ersten Schicht der UE, einer oder mehrerer Dienstqualitätsanforderungen, QoS-Anforderungen, für den Empfang für jeden bestimmten einen oder bestimmte mehrere Zielschicht-2-IDs; und
Bereitstellen (620), an eine zweite Schicht der UE, der bestimmten einen oder der bestimmten mehreren QoS-Anforderungen für jeden bestimmten einen oder bestimmte mehrere Zielschicht-2-IDs für den Empfang.

2. UE nach Anspruch 1, wobei der Prozessor konfiguriert ist, um die UE zu veranlassen, die eine oder die mehrere QoS-Anforderungen für den Empfang für jeden bestimmten einen oder bestimmte mehrere Zielschicht-2-IDs durch Bestimmen zugehöriger V2X-Dienstarten für jeden des einen oder der mehreren Zielschicht-2-IDs und die zugehörigen PC5-QoS-Parameter für jede V2X-Dienstart zu bestimmen.

3. UE nach Anspruch 1, ferner umfassend einen Transceiver, der konfiguriert ist, um die UE zu veranlassen, über eine erste Funkschnittstelle, die V2X-Konfiguration zu empfangen, die V2X-Konfiguration umfassend einen oder mehrere Zielschicht-2-IDs für jede V2X-Dienstart und eine oder mehrere QoS-Anforderungen für jede bestimmte V2X-Dienstart für eine Kommunikation über eine zweite Funkschnittstelle.

4. UE nach Anspruch 3, wobei der Transceiver konfiguriert ist, um die UE zu veranlassen, von einer Anwendung, eine Anforderung zu empfangen, Daten über die zweite Funkschnittstelle zu empfangen, die Anforderung umfassend die eine oder die mehreren QoS-Anforderungen.

5. UE nach Anspruch 3, wobei der Prozessor konfiguriert ist, um die UE zu veranlassen, die eine oder die mehreren QoS-Anforderungen basierend auf mindestens einer von der V2X-Konfiguration und der Anforderung von der Anwendung zu bestimmen.

6. UE nach Anspruch 1, wobei die V2X-Konfiguration von einer von einer Richtlinienkontrollfunktion, PCF, oder einer Anwendungsfunktion empfangen wird.

7. UE nach Anspruch 1, wobei der Prozessor konfiguriert ist, um die UE zu veranlassen, Informationen für einen angewandten diskontinuierlichen PC5-Empfang, DRX, für jede bestimmte V2X-Dienstart aus der zweiten Schicht zu empfangen.

8. Verfahren (600) für die drahtlose Kommunikation, umfassend:
Empfangen von Fahrzeug-an-Alles-Konfigurationsinformationen, V2X-Konfigurationsinformationen, die einen oder mehrere Zielschicht-2-Identifizierer, IDs, für den Empfang umfassen;
Bestimmen (605) eines oder mehrerer Zielschicht-2-IDs für den Empfang gemäß den V2X-Konfigurationsinformationen; **gekennzeichnet durch** ferner:
Bestimmen (615), auf einer ersten Schicht einer Benutzereinrichtung, UE, einer oder mehrerer Dienstqualitätsempfangsanforderungen, QoS-Empfangsanforderungen, für jeden bestimmten einen oder bestimmte mehrere Zielschicht-2-IDs; und
Bereitstellen (620), an eine zweite Schicht der UE, der bestimmten einen oder der bestimmten mehreren QoS-Anforderungen für jeden bestimmten einen oder bestimmte mehrere Zielschicht-2-IDs für den Empfang.

9. Verfahren nach Anspruch 8, ferner umfassend das Bestimmen der einen oder der mehreren QoS-Anforderungen für den Empfang für jeden bestimmten einen oder bestimmte mehrere Zielschicht-2-IDs durch Bestimmen zugehöriger V2X-Dienstarten für jeden des einen oder der mehreren Zielschicht-2-IDs und der zugehörigen PC5-QoS-Parameter für jede V2X-Dienstart.

10. Verfahren nach Anspruch 8, ferner umfassend das Empfangen, über eine erste Funkschnittstelle, der V2X-Konfiguration, die V2X-Konfiguration umfassend einen oder mehrere Zielschicht-2-IDs für jede V2X-Dienstart und eine oder mehrere QoS-Anforderungen für jede bestimmte V2X-Dienstart für die Kommunikation über eine zweite Funkschnittstelle.

11. Verfahren nach Anspruch 10, ferner umfassend das Empfangen, von einer Anwendung, einer Anforderung, Daten über die zweite Funkschnittstelle zu empfangen, die Anforderung umfassend die eine oder die mehreren QoS-Anforderungen.

12. Verfahren nach Anspruch 10, ferner umfassend das Bestimmen der einen oder der mehreren QoS-Anforderungen basierend auf mindestens einem von den V2X-Konfigurationen und der Anforderung von der Anwendung.

13. Verfahren nach Anspruch 8, wobei die V2X-Konfiguration von einer von einer Richtlinienkontrollfunktion, PCF, und einer Anwendungsfunktion empfangen wird.

14. Benutzereinrichtung (400), UE, für die drahtlose Kommunikation, umfassend:
mindestens einen Speicher (410); und **gekennzeichnet durch:**
mindestens einen Prozessor (405), der mit mindestens einem Speicher gekoppelt und konfiguriert ist, um die UE zu veranlassen zum:
Empfangen, von einer Fahrzeug-an-Alles-Schicht, V2X-Schicht, einer oder mehrerer Dienstgüteanforderungen, QoS-Anforderungen, für einen oder mehrere Zielschicht-2-IDs für den Empfang eines von einer Groupcast- oder einer Broadcast-Übertragung; und
Bestimmen von Informationen für einen angewandten diskontinuierlichen PC5-Empfang, DRX, basierend auf den QoS-Anforderungen.

15. UE nach Anspruch 14, wobei der Prozessor konfiguriert ist, um die UE zu veranlassen, die Informationen für den angewandten PC5 DRX basierend auf V2X-Konfigurationsinformationen zu bestimmen.

## Revendications

1. Équipement utilisateur (400), UE, pour la communication sans fil, comprenant :
au moins une mémoire (410) ; et
au moins un processeur (405) couplé à au moins une mémoire et configuré pour amener l'UE à :
recevoir des informations de configuration de véhicule à X, V2X, qui comprennent un ou plusieurs identificateurs, ID, de couche 2 de destination pour la réception ;
déterminer (605) le ou les ID de couche 2 de destination pour la réception en fonction des informations de configuration V2X ;
**caractérisé par** en outre :
la détermination (615), au niveau d'une première couche de l'UE, d'une ou plusieurs exigences de qualité de service, QoS, pour la réception pour chacun du ou des ID de couche 2 de destination déterminés ; et
la fourniture (620), à une seconde couche de l'UE, de la ou des exigences de QoS déterminées pour chacun du ou des ID de couche 2 de destination déterminés pour la réception.

2. UE selon la revendication 1, dans lequel le processeur est configuré pour amener l'UE à déterminer la ou les exigences de QoS pour la réception pour chacun du ou des ID de couche 2 de destination déterminés en déterminant des types de service V2X associés pour chacun du ou des ID de couche 2 de destination et les paramètres de QoS PC5 associés pour chaque type de service V2X.

3. UE selon la revendication 1, comprenant en outre un émetteur-récepteur configuré pour amener l'UE à recevoir, sur une première interface radio, la configuration V2X, la configuration V2X comprenant un ou plusieurs ID de couche 2 de destination pour chaque type de service V2X et une ou plusieurs exigences de QoS pour chaque type de service V2X déterminé pour la communication sur une seconde interface radio.

4. UE selon la revendication 3, dans lequel l'émetteur-récepteur est configuré pour amener l'UE à recevoir, à partir d'une application, une demande de réception de données sur la seconde interface radio, la demande comprenant la ou les exigences de QoS.

5. UE selon la revendication 3, dans lequel le processeur est configuré pour amener l'UE à déterminer la ou les exigences de QoS sur la base d'au moins l'une parmi la configuration V2X et la demande de l'application.

6. UE selon la revendication 1, dans lequel la configuration V2X est reçue à partir de l'une parmi une fonction de commande des politiques, PCF, et une fonction d'application.

7. UE selon la revendication 1, dans lequel le processeur est configuré pour amener l'UE à recevoir des informations pour une réception discontinue, DRX, PC5 appliquée pour chaque type de service V2X déterminé à partir de la seconde couche.

8. Procédé (600) de communication sans fil comprenant :
la réception d'informations de configuration de véhicule à X, V2X, qui comprennent un ou plusieurs identificateurs, ID, de couche 2 de destination pour la réception ;
la détermination (605) d'un ou plusieurs ID de couche 2 de destination pour la réception en fonction des informations de configuration V2X ;
**caractérisé par** en outre :
la détermination (615), au niveau d'une première couche d'un équipement utilisateur, UE, d'une ou plusieurs exigences de qualité de service, QoS, pour la réception pour chacun du ou des ID de couche 2 de destination déterminés ; et
la fourniture (620), à une seconde couche de l'UE, de la ou des exigences de QoS déterminées pour chacun du ou des ID de couche 2 de destination déterminés pour la réception.

9. Procédé selon la revendication 8, comprenant en outre la détermination de la ou des exigences de QoS pour la réception pour chacun du ou des ID de couche 2 de destination déterminés en déterminant des types de service V2X associés pour chacun du ou des ID de couche 2 de destination et les paramètres de QoS PC5 associés pour chaque type de service V2X.

10. Procédé selon la revendication 8, comprenant en outre la réception, sur une première interface radio, de la configuration V2X, la configuration V2X comprenant un ou plusieurs ID de couche 2 de destination pour chaque type de service V2X et une ou plusieurs exigences de QoS pour chaque type de service V2X déterminé pour la communication sur une seconde interface radio.

11. Procédé selon la revendication 10, comprenant en outre la réception, à partir d'une application, d'une demande de réception de données sur la seconde interface radio, la demande comprenant la ou les exigences de QoS.

12. Procédé selon la revendication 10, comprenant en outre la détermination de la ou des exigences de QoS sur la base d'au moins l'une parmi la configuration V2X et la demande de l'application.

13. Procédé selon la revendication 8, dans lequel la configuration V2X est reçue à partir de l'une parmi une fonction de commande des politiques, PCF, et une fonction d'application.

14. Équipement utilisateur (400), UE, pour la communication sans fil, comprenant :
au moins une mémoire (410) ; et **caractérisé par :**
au moins un processeur (405) couplé à au moins une mémoire et configuré pour amener l'UE à :
recevoir, à partir d'une couche de véhicule à X, V2X, une ou plusieurs exigences de qualité de service, QoS, pour un ou plusieurs ID de couche 2 de destination pour la réception de l'une parmi des transmissions de diffusion de groupe et des transmissions de diffusion générale ; et
déterminer des informations pour une réception discontinue, DRX, PC5 appliquée sur la base des exigences de QoS.

15. UE selon la revendication 14, dans lequel le processeur est configuré pour amener l'UE à déterminer les informations pour la DRX PC5 appliquée sur la base d'informations de configuration V2X.
